# EUROPEAN PATENT APPLICATION

(11) **EP 1 640 987 A1**
(43) Date of publication of application: **29.03.2006**
(21) Application number: 04747044.8
(22) Date of filing: 30.06.2004
(51) Int. Cl.: G11B 20/10, G11B 27/00, H04N 5/91

(54) **TEMPORARY ACCUMULATION MANAGEMENT DEVICE**

(30) Priority: 30.06.2003 JP 2003188958
(71) Applicant: SONY CORPORATION, Tokyo 141-0001 (JP)
(72) Inventor: Yamaki, Makio, Shinagawa-ku, Tokyo 141-0001 (JP)
(74) Representative: Mills, Julia
(86) International application number: PCT/JP2004/009575
(87) International publication number: WO 2005/001830

(57) **Abstract**

This invention manages temporary storage of content data according to guidelines.

According to this invention, when temporary storage of a recording transport stream TS3 which is allowed to be temporarily stored in a recording medium so as to be reproducible only within a temporary storage allowable time is managed, a reproducible start point indicating a start point from which the recording transport stream TS3 can be reproduced is associated with a first time stamp out of the time stamps of the GOPs of the recording transport stream TS3, and every time when a period from a time stamp associated with the reproducible start point to the current time reaches a temporary storage allowable time, the reproducible start point is re-associated to another time stamp following the time stamp, so that an overtime part of the recording transport stream TS3 can be removed from a reproducible range so as to easily and correctly disable its reproduction, thus being capable of easily and correctly managing the temporary storage of the recording transport stream TS3.

## Description

### Technical Field

This invention relates to a temporary storage management apparatus, and is suitably applied to a recording/reproducing apparatus for recording/reproducing the video/audio data of a digital television program comprising content data for digital terrestrial television broadcasting, for example.

### Background Art

Now, as to digital terrestrial television broadcasting, operational guidelines for starting broadcasting have been drafted, and broadcasting of three kinds of digital television programs has been proposed, i.e., digital television programs (hereinafter, referred to as copy protected programs) inhibiting copy (hereinafter, referred to as copy) for storage because of copyright protection, digital television programs inhibiting re-copy (that is, allowing only copy one generation), and digital television programs allowing copy without restrictions.

In addition, according to the operational guidelines for digital terrestrial television broadcasting, with recording media such as the hard disk drives of recording/reproducing apparatuses, even copy protected programs are allowed to be temporarily stored so as to be reproduced (that is, temporary recording of the video/audio data of copy protected programs) from a time (hereinafter, referred to as a temporary storage start time) of receiving their video/audio data at broadcasting time or of performing a process for watching on the video/audio data at the broadcasting time, for a prescribed temporary storage allowable time (for example, 90 minutes), and also only the copy protected programs temporarily stored within the temporary storage allowable time are allowed to be watched.

In actual, according to the operational guidelines for digital terrestrial television broadcasting, to temporarily store a copy protected program, the video/audio data of the copy protected program is managed on a management time (for example, one minute) basis, the management time shorter than the temporary storage allowable time. For example, if a part is stored at 1:00, its reproduction is disabled within a prescribed reproduction disabling time (for example, one minute) after a lapse of the temporary storage allowable time (2:30). Similarly, if a part is stored at 1:01, its reproduction is disabled within the reproduction disabling time after a lapse of the temporary storage allowable time (2:31). In this way, copy protected programs are restricted so that the reproduction of parts (hereinafter, referred to as overtime parts) stored over the temporary storage allowable time is sequentially disabled (for example, refer to non patent reference 1)

Non patent reference 1 "Operational guidelines for digital terrestrial television broadcasting, Technical report, ARIB TR-B14, 1.2 edition (third part)", Association of Radio Industries and Businesses corporation, Established on January 24, 2002, 1.1 revision on July 25, 2002, 1.2 revision on November 27, 2002, P8.3, 8.19.

By the way, the operational guidelines for digital terrestrial television broadcasting exemplifies, for example, a method (hereinafter, referred to as data deletion method) of sequentially deleting overtime parts of the video/audio data D1 of a copy protected program TP1 within a reproduction disabling time, as shown in Fig. 8, as a method of disabling the reproduction of overtime parts of copy protected programs.

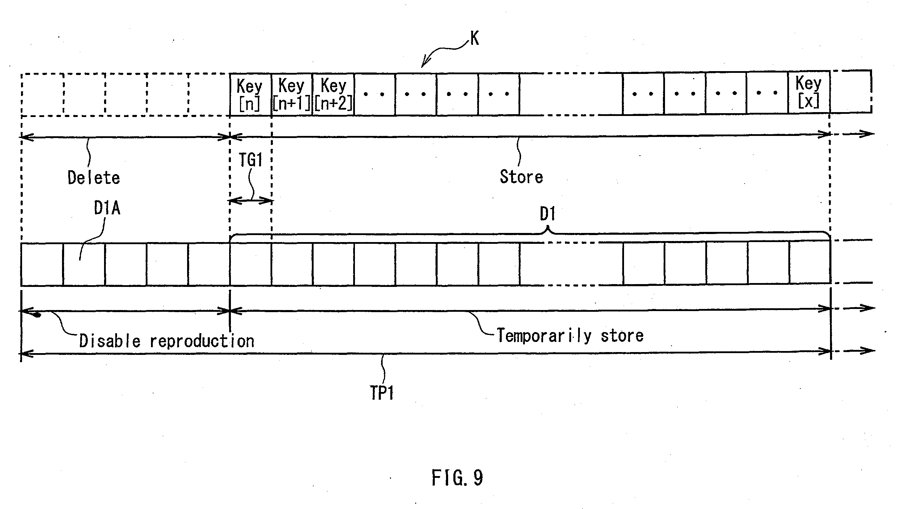

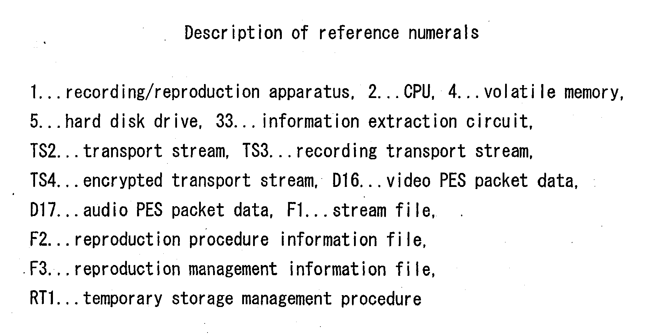

In addition, the operational guidelines for digital terrestrial television broadcasting prescribes that a recording/reproducing apparatus encrypts (hereinafter, referred to as locally encrypts) and records the video/audio data D1 of a copy protected program TP1 when temporarily storing the copy protected program TP1. As shown in Fig. 9, the operational guidelines also exemplify a method (hereinafter, referred to as a local scramble key deletion method) of locally encrypting the video/audio data D1 of the copy protected program TP1 with encryption key data (hereinafter, referred to as local scramble key data) K which is different for every part TG1 of a management time unit and disabling decoding of the video/audio data D1 corresponding to overtime parts D1A by sequentially deleting the local scramble key data used for the local encryption of the overtime parts D1A (that is, a method of disabling reproduction).

However, the data deletion method has a problem in that, since the recording/reproducing apparatus records and manages the video/audio data D1 of the copy protected program TP1 as a file, a special file system for sequentially deleting only the overtime parts should be created for the video/audio data D1 of the copy protected program TP1 temporarily stored and therefore the temporary storage of the copy protected program cannot be managed easily according to the guidelines.

In addition, according to the local scramble key deletion method, the recording/reproducing apparatus is required to sequentially create the local scramble key data K to be used for the local encryption every time when temporarily storing a part TG of the management time unit of the video/audio data D1, and also is required to manage a large number (for example, 90) of local scramble keys K for the temporary storage allowable time, resulting in complicating a process to temporarily store the copy protected program TP1. As a result, even the local scramble key deletion method is insufficient to manage the temporary storage of copy protected programs according to the guidelines.

### Disclosure of the Invention

The invention has been made in view of foregoing and proposes a temporary storage management apparatus capable of easily and correctly managing the temporary storage of content data according to the guidelines.

To solve the above problems, in this invention, in order to manage the temporary storage of content data which is allowed to be temporarily stored for reproduction only for a prescribed temporary storage allowable time in a recording medium, a reproducible start point representing a start point from which the content data can be reproduced is associated with the first temporary storage start time out of the temporary storage start times each for every prescribed part of the content data, and every time when a period from the temporary storage start time associated with the reproducible start point until the current time reaches the temporary storage allowable time, another temporary storage start time after the temporary storage start time is re-associated with the reproducible start point.

Therefore, overtime parts of the content data temporarily stored are removed from the reproducible range which is a range temporarily stored within the temporary storage allowable time, by being sequentially located temporally before the reproducible start point.

### Brief Description of Drawings

Fig. 1 is a block diagram showing one embodiment of the entire construction of a recording/reproducing apparatus according to this invention.
Fig. 2 is a schematic diagram showing a change history of copyright protection information.
Fig. 3 is a schematic diagram explaining the recording of a copy permitted program.
Fig. 4 is a schematic diagram explaining the update of reproducible end point information for recording a copy permitted program.
Fig. 5 is a schematic diagram explaining the temporary storage of a copy protected program.
Fig. 6 is a schematic diagram explaining the update of reproducible start point information and reproducible end point information for the temporary storage of a copy protected program.
Fig. 7 is a flowchart showing a temporary storage management procedure.

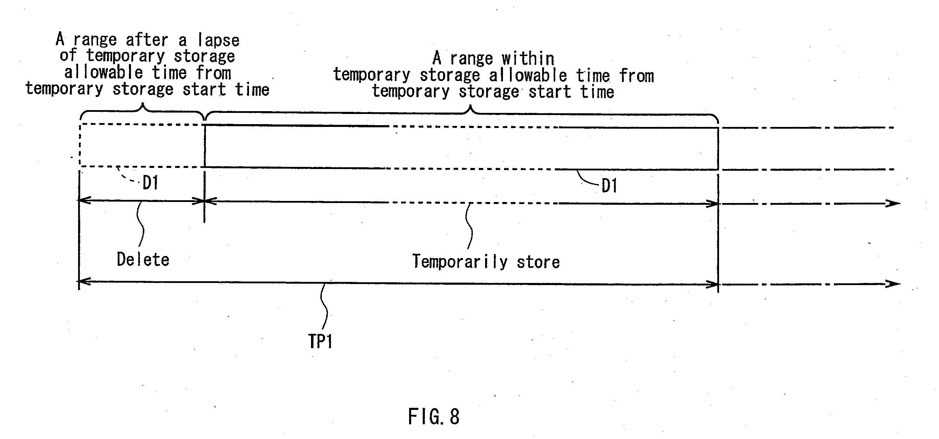

Fig. 8 is a schematic diagram explaining the disabling of reproduction of a copy protected program with a data deletion method.
Fig. 9 is a schematic diagram explaining the disabling of reproduction of a copy protected program with a local scramble key deletion method.

### Best Mode for Carrying out the Invention

Hereinafter, one embodiment of this invention will be described in detail with reference to the accompanying drawings.

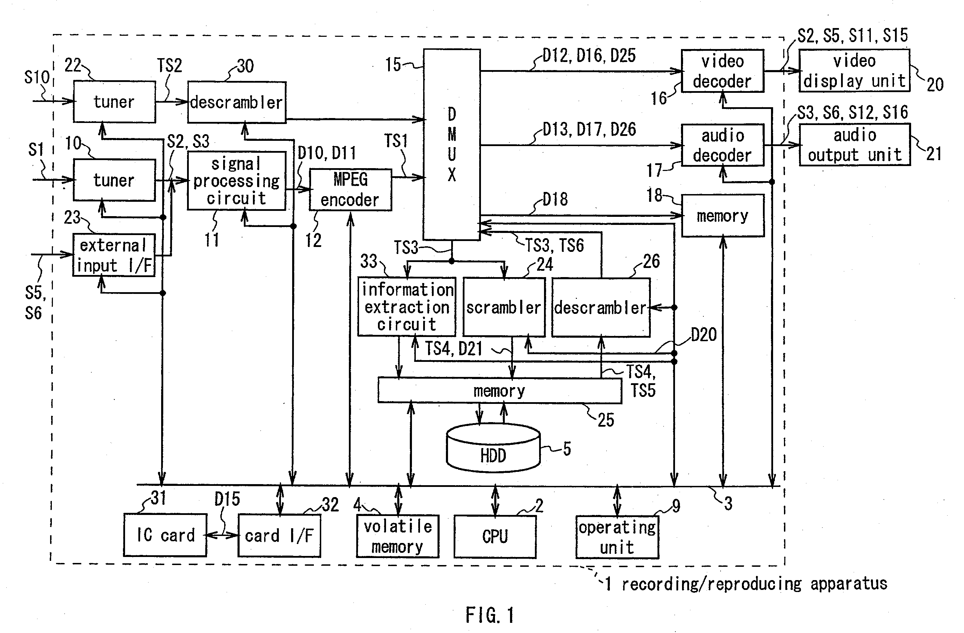

Referring to Fig. 1, reference numeral 1 shows a recording/reproducing apparatus to which this invention is implemented. Connected to a CPU (Central Processing Unit) 2 is a plurality of circuit blocks including a volatile memory 4 serving as a work area of the CPU 2. The CPU 20 controls each circuit block according to various programs including a recording processing program, a reproduction processing program and a temporary storage management program being stored in the hard disk of a hard disk drive 5, so as to execute processes for watching and for recording/reproduction on digital television programs of digital terrestrial television broadcasting, analog television programs of analog terrestrial television broadcasting, and video/audio (hereinafter, referred to as external video/audio) supplied from external devices such as video cameras.

When an analog television program of the analog terrestrial television broadcasting is watched, the CPU 2 first controls an analog tuner 10 according to the channel of the analog television broadcasting specified for watching the desired analog television program via an operating unit 9 such as a remote controller.

The analog tuner 10 takes in a television signal group S1 for a plurality of channels of the analog terrestrial television broadcasting received by an antenna (not shown), selects the television signal of the channel specified for watching, out of the taken television signal group S1 and applies a wave detection process and a demodulation process, and sends the obtained analog video signal S2 and audio signal S3 to a signal processing circuit 11.

Out of the video signal S2 and the audio signal S3 given from the analog tuner 10, the signal processing circuit 11 performs analog-to-digital conversion on the video signal S2 and sends the obtained video data D10 to an MPEG encoder 12, and performs the analog-to-digital conversion on the audio signal S3 and sends the obtained audio data D11 to the MPEG encoder 12.

The MPEG encoder 12 compresses and encodes the video data D10 and the audio data D11 given from the signal processing circuit 11 with the MPEG (Moving Picture Experts Group) 2 standards, and converts the resultant compressed and encoded video data and compressed and encoded audio data in an ES (Elementary Stream) format into TS (Transport Stream) packets for every prescribed unit, thereby creating video TS packet data and audio TS packet data.

Then the MPEG encoder 12 performs time division multiplexing on the video TS packet data and the audio TS packet data, and sends the obtained transport stream TS1 to a demultiplexer 15.

The demultiplexer 15 divides the transport stream TS1 given from the MPEG encoder 12, into video TS packet data and audio TS packet data.

In addition, the demultiplexer 15 creates compressed and encoded video data D12 in the ES format based on the video TS packet data and sends this to the video decoder 16, and creates compressed and encoded audio data D13 in the ES format based on the audio TS packet data and sends this to the audio decoder 17.

Then the video decoder 16 creates video data by decoding the compressed and encoded video data D12 given from the demultiplexer 15 with the MPEG2 standards, and performs the digital-to-analog conversion on the created video data and sends the obtained video signal S2 to an external video display unit 20.

The audio decoder 17 creates audio data by decoding the compressed and encoded audio data D13 given from the demultiplexer 15 with the MPEG2 standards, and performs the digital-to-analog conversion on the created audio data and sends the obtained audio signal S3 to an external audio output unit 21.

Thereby, the recording/reproducing apparatus 1 is capable of displaying the program video of the analog television program based on the video signal S2 on the video display unit 20 and simultaneously, outputting the program sound of the analog television program based on the audio signal S3 from the audio output unit 21, so that a user can watch the desired analog television program.

On the other hand, when an external input is selected via the operating unit 9 to watch external video/audio, the CPU 2 controls the analog tuner 10 and the digital tuner 22 to stop their operation accordingly.

In this situation, the signal processing circuit 11 takes in an analog video signal S5 and audio video signal S6 supplied from an external device, via an external input interface 23.

Then the signal processing circuit 11, the MPEG encoder 12, the demultiplexer 15, the video decoder 16, and the audio decoder 17 execute the same processes as the above-described case of watching an analog television program.

Thereby, the recording/reproducing apparatus 1 is capable of displaying the video based on the video signal S5 on the video display unit 20 and outputting the sound based on the audio signal S6 from the audio output unit 21, so that the user can watch the external video/audio.

On the other hand, to record an analog television program, the CPU 2 controls the analog tuner 10 according to the channel for recording specified via the operating unit 9.

At this time, the analog tuner 10 takes in a television signal group S1 for a plurality of channels of the analog terrestrial television broadcasting received by the antenna, selects the television signal of the channel specified for recording, out of the taken television signal group S1 and applies the wave detection process and the demodulation process, and sends the obtained analog video signal S2 and audio signal S3 to the signal processing circuit 11.

The signal processing circuit 11 creates the video data D10 and the audio data D11 based on the video signal S2 and the audio signal S3 and sends these to the MPEG encoder 12, as in the above-described case of watching an analog television program.

The MPEG encoder 12 creates a transport stream TS1 based on the video data D10 and the audio data D11 and sends these to the demultipexer 15, as in the above-described case of watching an analog television program.

The demultiplexer 15 sends the transport stream TS1 given from the MPEG encoder 12, to the hard disk drive 5 via a scrambler 24 and a memory 25 as it is, so as to record the transport stream TS1 in the hard disk as a file.

In this way, the recording/reproducing apparatus 1 records the transport stream TS1 corresponding to the analog television program of the specified channel in the hard disk after recording start is instructed via the operating unit 9 or the like until recording end is instructed, thus being capable of recording the desired analog television program.

On the other hand, to reproduce an analog television program, the CPU 2 controls the hard disk drive 5 via the memory 25 based on the analog television program specified for reproduction via the operating unit 9 and in response to a reproduction command for the analog television program.

Thereby the hard disk drive 5 reads the transport stream TS1 of the specified analog television program from the hard disk, and sends the read transport stream TS1 to the demultiplexer 15 via the memory 25 and the descrambler 26 in order.

At this time, the demultiplexer 15 applies the same processes as the above-described case of watching an analog television program, on the transport stream TS1 reproduced from the hard disk, and sends the obtained compressed and encoded video data D12 to the video decoder 16 and sends the compressed and encoded audio data D13 to the audio decoder 17.

The video decoder 16 and the audio decoder 17 perform the same processes as the above-described case of watching an analog television program, and sends the video signal S2 based on the compressed and encoded video data D12 to the external video display unit 20 and sends the audio signal S3 based on the compressed and encoded audio data D13 to the external audio output unit 21.

Thereby, the recording/reproducing apparatus 1 is capable of displaying the program video of the analog television program based on the video signal S2 on the video display unit 20 and outputting the program sound of the analog television program based on the audio signal S3 from the audio output unit 21, so that the user can watch the desired analog television program once recorded.

On the other hand, when an external input is selected and recording is instructed via the operating unit 9 to record external video/audio, the CPU 2 controls the analog tuner 10 and the digital tuner 22 to stop their operation accordingly.

In this situation, the signal processing circuit 11 takes in the analog video signal S5 and audio signal S6 supplied from the external device, via the external input interface 23.

Then the signal processing circuit 11, the MPEG encoder 12, the demultiplexer 15, the scrambler 24, the memory 25, and the hard disk drive 5 perform the same processes as the above-described case of recording an analog television program.

Thereby, the recording/reproducing apparatus 1 creates a transport stream comprising compressed and encoded video data and compressed and encoded audio data corresponding to the external video/audio and records these in the hard disk of the hard disk drive 5 as a file, after recording start is instructed via the operating unit 9 or the like until recording end is instructed.

On the other hand, to reproduce external video/audio, the CPU 2 controls the hard disk drive 5 via the memory 25 based on the external video/audio for reproduction specified via the operating unit 9 and in response to a reproduction command for the external video/audio.

Thereby the hard disk drive 5 reads the transport stream of the specified external video/audio from the hard disk, and sends the read transport stream to the demultiplexer 15 via the memory 25 and the descrambler 26 in order.

Then the demultiplexer 15, the video decoder 16, the audio decoder 17 perform the same processes as the above-described case of reproducing an analog television program.

Thereby the recording/reproducing apparatus 1 is capable of displaying the video of the external video/audio based on the video signal S5 on the video display unit 20 and outputting the sound of the external video/audio based on the audio signal S6 from the audio output unit 21, so that the user can watch the external video/audio once recorded.

By the way, from a broadcasting station (not shown) for the digital terrestrial television broadcasting, a plurality of transport streams is sent as television signals S10, the transport signals obtained by compressing and encoding digital video data and audio data of digital terrestrial television programs with the MPEG2 standards, sequentially converting the resultant into PES (Packetized Elementary Stream) packets and TS packets, and performing the time division multiplexing on the obtained video TS packet data and audio TS packet data for every prescribed channels together with section TS packet data, the section TS packet data obtained by converting section data into TS packets, the section data storing additional information to specify the digital television programs.

To watch a digital television program, the CPU 2 controls the digital tuner 22 according to a channel (hereinafter, referred to watching specified channel) for watching specified via the operating unit 9, in the digital television broadcasting.

The digital tuner 22 takes in a plurality of television signals S10 of the digital terrestrial television broadcasting received by the antenna (not shown), selects the television signal S10 of the watching specified channel out of the taken television signals S10, performs the wave detection process and the demodulation process, and sends the obtained digital transport stream TS2 to the descrambler 30.

In this connection, to let only users who are allowed to watch the digital television program of the channel corresponding to the transport stream TS2, the transport stream TS2 is previously encrypted on the broadcasting station side.

Therefore, in a case where the transport stream TS2 of the watching specified channel is previously encrypted on the broadcasting station side, the CPU 2 reads scramble key data D15 from an IC (Integrated Circuit) card 31 via the card interface 32 and sends this to the descrambler 30, the IC card provided from the provider of the digital terrestrial television broadcasting to the user.

In a case where the transport stream TS2 given from the digital tuner 22 is encrypted, the descrambler 30 decodes the transport stream TS2 with the scramble key data D15 given from the CPU 2, and sends the resultant to the demultiplexer 15.

In a case where the transport stream TS2 given from the digital tuner 22 is not encrypted, the descrambler 30 sends the transport stream TS2 to the demultiplexer 15 as it is.

The demultiplexer 15 is given a PID (Packet IDentifier) to specify section TS packet data, from the CPU 2, and separates the section TS packet data from the transport stream TS2 given from the descrambler 30, based on the PID, and separates the video TS packet data and the audio TS packet data of the digital television program based on the PID which is stored in the section TS packet data and specifies the digital television program of the watching specified channel.

In addition, the demultiplexer 15 creates the video PES packet data D16 based on the video TS packet data and creates the audio PES packet data D17 based on the audio TS packet data, and sends the created video PES packet data D16 to the video decoder 16 and sends the audio PES packet data D17 to the audio decoder 17.

Further, the demultiplexer 15 creates the original section data D18 based on the section TS packet data and sends this to the memory 18.

Then the CPU 2 reads the section data D18 from the memory 18, and controls the video decoder 16 and the audio decoder 17 in an order of decoding indicated by the additional information being stored in the read section data D18.

The video decoder 16 creates the original video data by decoding the video PES packet data D16 given from the demultiplexer 15, with the MPEG2 standards, performs the digital-to-analog conversion on the created video data, and sends the obtained video signal S11 to the external video display unit 20.

In addition, the audio decoder 17 creates the original audio data by decoding the audio PES packet data D17 given from the demultiplexer 15 with the MPEG2 standards, performs the digital-to-analog conversion on the created audio data and sends the obtained audio signal S12 to the external audio output unit 21.

Thereby, the recording/reproducing apparatus 1 is capable of displaying the program video of the digital television program based on the video signal S11 on the video display unit 20 and outputting the program sound of the digital television program based on the audio signal S12 from the audio output unit 21, so that the user can watch the desired digital television program.

In addition to the above configuration, in a case of this recording/reproducing apparatus 1, when a recording command for a digital television program being watched is entered via, for example, the operating unit 9 while the digital television program of a desired channel is being watched, the CPU 2 controls the digital tuner 22, the descrambler 30, the video decoder 16, the audio decoder 17, and the memory 18 so as to perform the same processes as the above-described case of watching a digital television program, and also controls the demultiplexer 15 in response to the recording command.

In this case, the demultiplexer 15 separates section TS packet data, and the video TS packet data and audio TS packet data of the digital television program being watched and to be recorded, from the transport stream TS2 given from the descrambler 30, as in the above-described case of watching a digital television program.

In addition, the demultiplexer 15 sends the video PES packet data D16 created based on the video TS packet data, the audio PES packet data D17 created based on the audio TS packet data, and the section data D18 created based on the section TS packet data, to the video decoder 16, the audio decoder 17, and the memory 18, so as to allow the desired digital television program to be watched at broadcasting time.

In addition, the demultiplexer 15 creates the recording transport stream TS3 corresponding to the digital television program to be recorded, by performing the time division multiplexing on the section TS packet data, the video TS packet data and the audio TS packet data separated from the transport stream TS2, and sends this to the information extraction circuit 33 and the scrambler 24.

Then the CPU 2 reads the section data D18 from the memory 18 and extracts program information to specify the digital television program to be recorded, from the read section data D18, recognizes, for example, switching of the digital television program to be recorded (that is, broadcasting end and broadcasting start), creates local scramble key data D20 which is different depending on television programs to be recorded based on the recognition result, and sends the created local scramble key data D20 to the scrambler 24.

Therefore, the scrambler 24 locally encrypts the compressed and encoded video data and the compressed and encoded audio data being stored in the recording transport stream TS3 given from the demultiplexer 15, with the local scramble key data D20 and sends the obtained encrypted transport stream TS4 to the memory 25, and encrypts the local scramble key data D20 with information (manufacturing number of the recording/reproducing apparatus 1 or the like) unique to the recording/reproducing apparatus 1 and sends the obtained encrypted scramble key data D21 to the memory 25.

Therefore, the CPU 2 controls the memory 25 to store the encrypted transport stream TS4 corresponding to the digital television program being watched, in the hard disk of the hard disk drive 5 as a stream file.

On the other hand, the information extraction circuit 33 extracts stream management information which is used for reproducing a recorded digital television program (that is, used for reproducing the recording transport stream TS3), and program information from the section TS packet data included in the recording transport stream TS3 given from the demultiplexer 15.

In a case where the beginning part of GOP (Group Of Picture) accompanied with a sequence header which is randomly accessible is stored in the data storage part following a PES header of the video TS packet data included in the recording transport stream TS3, the PES header stores management information (hereinafter, referred to as time stamp, simply) for time for reproduction output (that is, this time is a time when the watching process was performed and is a temporary storage start time) represented by a time with about a 26-hour cycle called PTS (Presentation Time Stamp) added to a frame image which is the beginning of the GOP and is assigned with an inter frame encoded image (that is, I (Intra) picture).

Then since GOPs are sequentially created for the data of frame images (that is, about 15 frame images) which continue for a prescribed time (for example, about 0.5 seconds) shorter than the temporary storage management time unit, from the beginning of the video data out of a plurality of continuous frame images composing the video data of the digital television program, the time stamp represents time which varies at a reproduction period (for example, about 0.5 seconds) of a frame image which is the beginning of the GOP and is assigned with the inter frame encoded image.

Therefore, to randomly access the recording transport stream TS3 at a time of reproduction, the information extraction circuit 33 sequentially extracts the time stamps from a plurality of PES packets of the video TS packet data included in the recording transport stream TS3 as the broadcasting time passes, and sends the extracted time stamps to the CPU 2 via the memory 25.

Further, the section data D18 stores copyright protection information for the digital television program to be recorded, and the copyright protection information indicating one restriction set to a digital television program by a broadcasting station, out of three selections, copy never, copy one generation (that is, re-copy is inhibited) and copy free without restrictions.

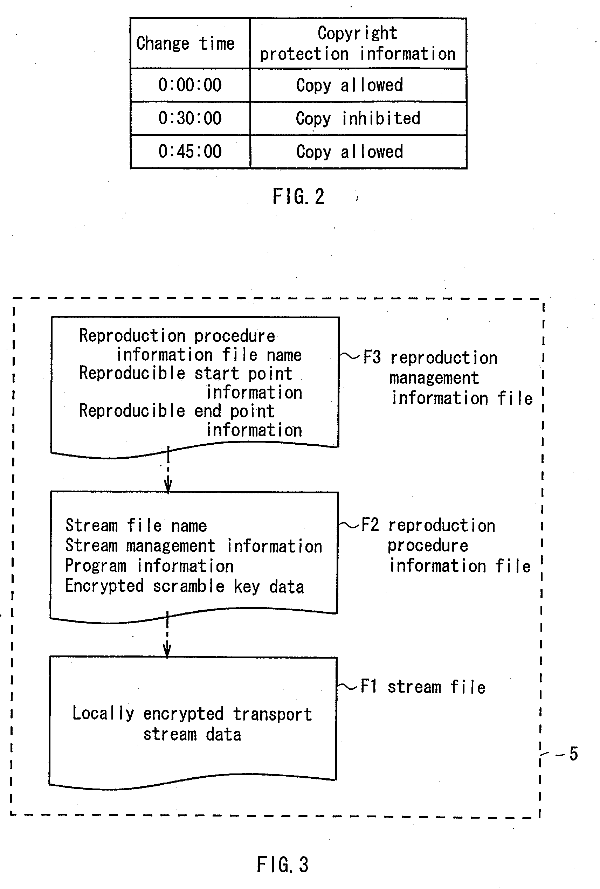

Therefore, as shown in Fig. 2, the CPU 2 extracts the copyright protection information from the section data D18 read from the memory 18 and every time when the contents of the copyright protection information are changed according to switching between digital television programs to be recorded, stores the change time (that is, this time is the broadcasting start time of a new digital television program and is referred to as change time) in the volatile memory 4 together with the contents of the changed copyright protection information, thereby creating a change history (hereinafter, referred to as history information) of copyright protection information of digital television programs to be recorded, on the volatile memory 4.

Then, as shown in Fig. 3, when it is determined based on the change history of the copyright protection information that the digital television program being currently recorded is a digital television program allowing copy one generation or a digital television program allowing copy without restrictions (these are collectively referred to as copy permitted program), the CPU 2 creates, on the memory 25, reproduction procedure information storing a file name (hereinafter, referred to as stream file name) of the encrypted transport stream TS4 recorded in the hard disk as a file (that is, as a stream file F1), data management information and program information extracted by the information extraction circuit 33 and the encrypted scramble key data D21, and records the created reproduction procedure information in the hard disk of the hard disk drive 5 as a reproduction procedure information file F2.

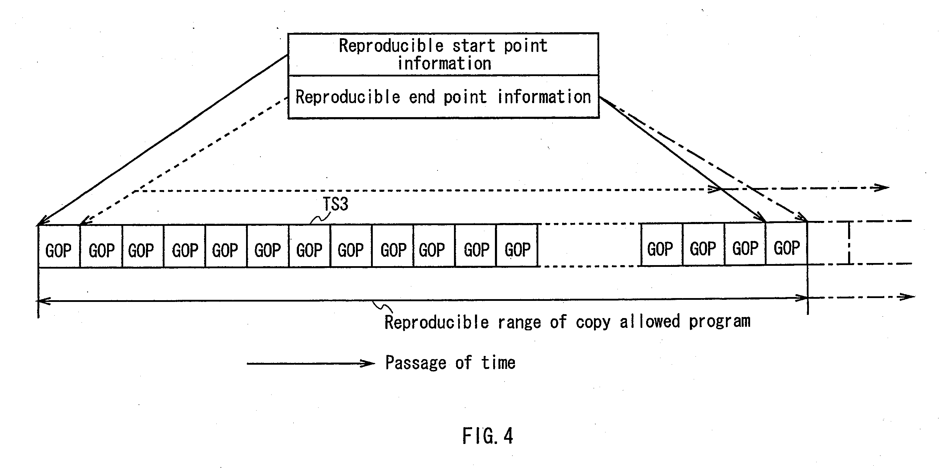

In addition, on the volatile memory 4, as shown in Fig. 4, the CPU 2 creates reproducible start point information indicating a time stamp associated with a reproducible start point by associating the first time stamp with a reproducible start point, the first time stamp first extracted by the information extraction circuit 33 from the PES header of the recording start part of the video TS packet data included in the recording transport stream TS3, the reproducible start point indicating the start point from which the recording transport stream TS3 can be reproduced.

In addition, when the information extraction circuit 33 extracts the time stamp from the PES header of the video TS packet data included in the recording transport stream TS3 next while the copy permitted program is recorded, the CPU 2 creates, on the volatile memory 4, reproducible end point information indicating a time stamp associated with a reproducible end point by associating the extracted time stamp with the reproducible end point indicating an end point until which the recording transport stream TS3 can be reproduced.

Then every time when the information extraction circuit 33 extracts a time stamp from a PS header of the video TS packet data, the CPU 2 updates, on the volatile memory 4, the contents of the reproducible end point information by re-associating another time stamp (in actual, time stamp next to the time stamp associated with the reproducible end point) temporally following the time stamp associated with the reproducible end point. Then, finally, the reproducible end point information is updated by re-associating the time stamp finally extracted from the PES header of the recording end part of the video TS packet data with the reproducible end point.

In addition, when recording of the encrypted transport stream TS4 in the hard disk starts, the CPU 2 calculates a reproduction disabling detection time, which is the temporary storage allowable time before the current time, by subtracting the temporary storage allowable time from the current time, at prescribed periods within the temporary storage management time.

In addition, by comparing the reproduction disabling detection time with the change time in the history information, the CPU 2 determines whether a copy protected digital television program (hereinafter, referred to as copy protected program) was temporarily stored at the reproduction disabling detection time.

If a copy protected program was not temporarily stored or a copy permitted program was recorded at the reproduction disabling detection time, the CPU 2 does not change the correspondence between the time stamp and the reproducible start point, for the copy permitted program recorded at the reproduction disabling detection time.

When the recording of the encrypted transport stream TS4 corresponding to the copy permitted program in the hard disk is completed, the CPU 2 (Fig. 3) creates, on the volatile memory 4, reproduction management information storing reproducible start point information, reproducible end point information finally obtained by updating the contents, and a file name (hereinafter, referred to as reproduction procedure information file name) of the reproduction procedure information file F2, and sends this to the hard disk drive 5 via the memory 25 as a file, thereby recording the reproduction management information in the hard disk as a reproduction management information file F3.

As described above, the CPU 2 records the stream file F1, the reproduction procedure information file F2, and the reproduction management information file F3, which are sequentially associated with each other by using the file name, in the hard disk of the hard disk drive 5, so as to record the copy permitted program in a state where the program can be reproduced freely within a reproducible range (in this case, entire copy permitted program) from the reproducible start point to the reproducible end point.

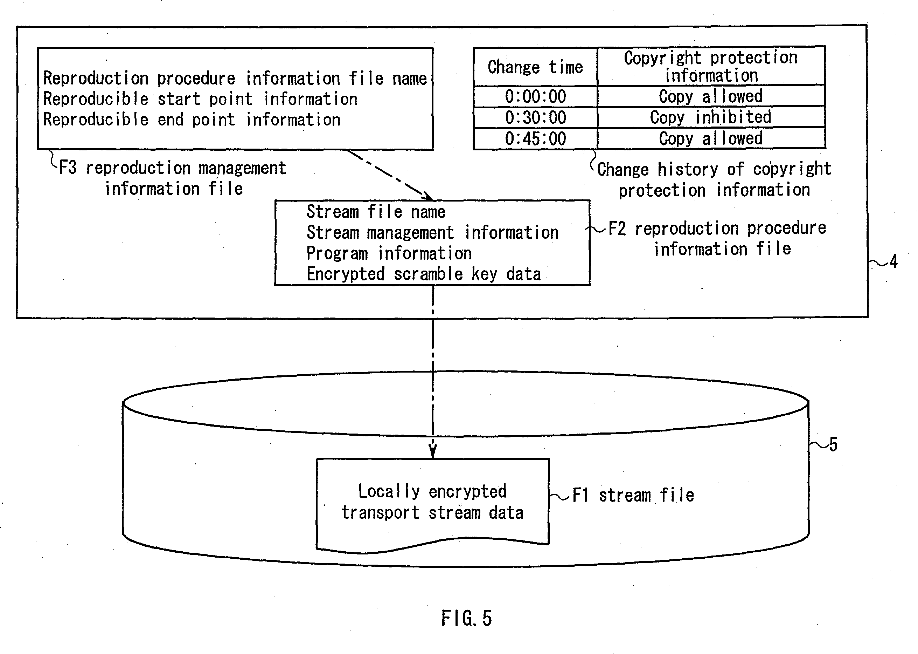

On the other hand, when it is detected based on the history information being stored in the volatile memory 4 that the digital television program being recorded is a copy protected program, the CPU 2 creates reproduction procedure information in the same manner as the above-described case, on the memory 25, and reads the created reproduction procedure information and stores it in the volatile memory 4 as a reproduction procedure information file F2, as shown in Fig. 5.

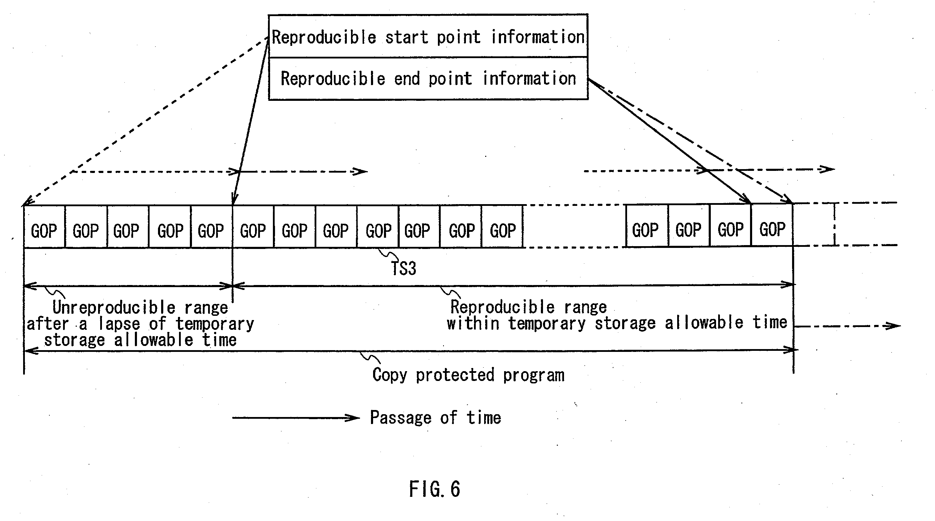

In addition, as shown in Fig. 6, the CPU 2 creates, on the volatile memory 4, reproducible start point information by associating the first time stamp first extracted from a PES header of the recording start part of the video TS packet data included in the recording transport stream TS3 with a reproducible start point for reproducing the recording transport stream TS3.

Further, when the information extraction circuit 33 extracts a time stamp from a PES header of the video TS packet data included in the recording transport stream TS3 next while the copy protected program is recorded, the CPU 2 creates, on the volatile memory 4, reproducible end point information by associating the extracted time stamp with the reproducible end point for reproducing the recording transport stream TS3.

Then, every time when the information extraction circuit 33 extracts a time stamp from a PES header of the video TS packet data included in the recording transport stream TS3 while the copy protected program is recorded, the CPU 2 updates, on the volatile memory 4, the contents of the reproducible end point information by re-associating another time stamp temporally following the time stamp being associated with the reproducible end point, with the reproducible end point. Then, finally, the reproducible end point information is updated by re-associating the time stamp finally extracted from the PES header of the recording end part of the video TS packet data with the reproducible end point.

In addition, similarly to the above-described case of recording a copy permitted program, when the recording of the encrypted transport stream TS4 in the hard disk starts, the CPU 2 calculates a reproduction disabling detection time by subtracting the temporary storage allowable time from the current time at a prescribed period within the temporary storage management time, and compares the calculated reproduction disabling detection time with the change time in the history information to determine whether the copy protected program was temporarily stored at the reproduction disabling detection time.

When the copy protected program is being recorded for temporary storage after the copy permitted program and therefore the copy permitted program was recorded at the reproduction disabling detection time, the CPU 2 does not change the time stamp associated with the reproducible start point for the copy protected program being recorded because the temporary storage allowable time is not elapsed after the temporary storage recording starts.

Further, when the copy protected program being recorded for temporary storage was recorded at the reproduction disabling detection time and the reproduction disabling detection time is almost the same as the temporary storage start time indicated by the time stamp associated with the reproducible start point, the CPU 2 re-associates another time stamp (in actual, time stamp next to the time stamp associated with the reproducible start point) temporally following the time stamp associated with the reproducible start point, with the reproducible start point for the copy protected program being recorded, and updates the contents of the reproducible start point information accordingly.

Therefore, for the recording transport stream TS3 corresponding to the copy protected program being recorded, the CPU 2 can specify a range from the temporary storage start time indicated by one time stamp re-associated with the reproducible start point till the temporary storage start time indicated by the other time stamp associated with the reproducible end point, as a reproducible range temporary stored from the temporary storage start time within the temporary storage allowable time, and disables the reproduction of a range before the temporary storage start time indicated by the time stamp re-associated with the reproducible start point, as an unreproducible range stored over the temporary storage allowable time after the temporary storage start time.

Then when the recording of the encrypted transport stream TS4 corresponding to the copy protected program in the hard disk of the hard disk drive 5 is completed, the CPU 2 creates reproduction management information storing reproducible start point information finally obtained by updating the contents, reproducible end point information finally obtained similarly by updating the contents, and a reproduction procedure information file name, and stores the created reproduction management information in the volatile memory 4 as a reproduction management information file F3.

As described above, the CPU 2 records the stream file F1 in the hard disk of the hard disk drive 5 and stores the reproduction procedure information file F2 and the reproduction management information file F3 sequentially associated with the stream file F1 in the volatile memory 4, and thus the copy protected program can be temporarily stored in a state where the program can be reproduced freely within the reproducible range between the reproducible start point information and the reproducible end point information.

By the way, while a copy protected program or a copy permitted program is being recorded, when another copy protected program was recorded at the reproduction disabling detection time and the temporary storage start time indicated by the time stamp associated with the reproducible start point is almost the same as the reproduction disabling detection time in the copy protected program, the CPU 2 updates the contents of the reproducible start point information in the reproduction management information file F3 by re-associating another time stamp temporally following the time stamp associated with the reproducible start point, with the reproducible start point within the reproduction disabling time.

In this connection, since the temporary storage allowable time is not elapsed after the temporary storage recording starts for the copy protected program being recorded for the temporary storage, the CPU 2 does not change the time stamp associated with the reproducible start point.

Then while the copy protected program or the copy permitted program is being recorded, the time stamp associated with the reproducible start point can be changed to another time stamp temporally following the time stamp associated with the reproducible start point for such another copy protected program but the time stamp associated with the reproducible end point is re-associated with the reproducible start point, and as a result, if the temporary storage start time indicated by the time stamp matches the reproduction disabling detection time, which means that the copy protected program is stored over the temporary storage allowable time, so that the CPU 2 deletes the reproducible start point information and the reproducible end point information from the corresponding reproduction management information file F3.

In this way, the CPU 2 deletes the reproducible start point information and the reproducible end point information when the other copy protected program is temporarily stored over the temporary storage allowable time after the temporary storage start time, so that the reproducible range of the other copy protected program cannot be specified to disable the reproduction, resulting in preventing the copy protected program from being temporarily stored in a state where the program can be reproduced over the temporary storage allowable time.

In addition, even if the recording of the copy protected program is completed, the CPU 2 calculates the reproduction disabling detection time by subtracting the temporary storage allowable time from the current time at prescribed periods within the temporary storage management time and compares the calculated reproduction disabling detection time with the change time of the history information, to determine whether the copy protected program was temporarily stored at the reproduction disabling detection time.

When, as a result, the copy protected program was recorded for the temporary storage at the reproduction disabling detection time and the temporary storage start time indicated by the time stamp associated with the reproducible start point almost matches the reproduction disabling detection time in the copy protected program, the CPU 2 changes the time stamp which is associated with the reproducible start time, to a temporally following time stamp in the same manner as above and updates the contents of the reproducible start point information in the reproduction management information file F3 accordingly.

Then as a result of repeating the change of the time stamp which is associated with the reproducible start point, when the temporary storage start time indicated by the time stamp matches the reproduction disabling detection time after the time stamp associated with the reproducible end point is re-associated with the reproducible start point, the CPU 2 deletes the reproducible start point information and the reproducible end point information in the corresponding reproduction management information file F3 in the same manner as the above-described case, thereby disabling the reproduction with preventing the copy protected program from being stored in a situation where the program can be reproduced over the temporary storage allowable time.

As described above, when a copy protected program is temporarily stored, the CPU 2 associates the first time stamp, out of the time stamps sequentially extracted from the GOP parts of the recording transport stream TS3 corresponding to the copy protected program, with the reproducible start point, and every time when a period from the temporary storage start time indicated by the time stamp associated with the reproducible start point until the current time reaches the temporary storage allowable time, the CPU 2 re-associates another time stamp temporally following the time stamp with the reproducible start point, so as to correctly distinguish between the reproducible range and the unreproducible range of the recording transport stream TS3 based on the temporary storage allowable time.

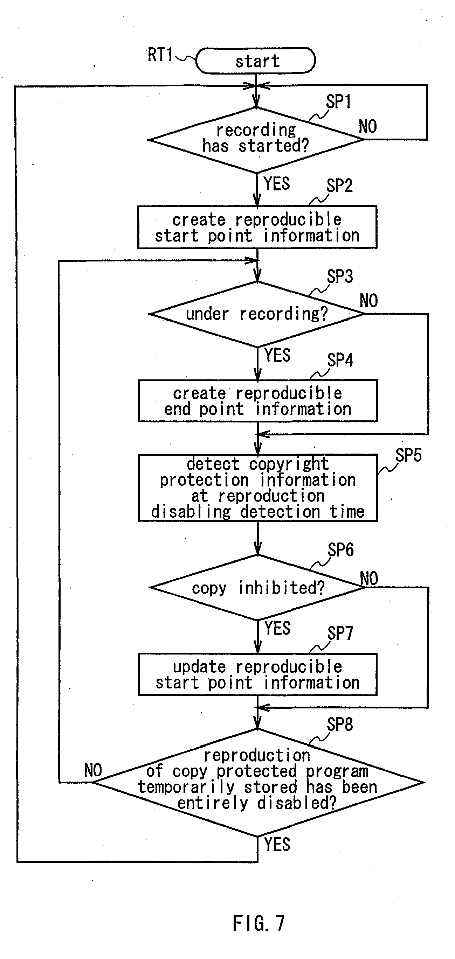

In actual, when the recording/reproducing apparatus 1 starts, the CPU 2 executes a temporary storage management process with a temporary storage management program being stored in the hard disk of the hard disk drive 5, and enters a temporary storage management procedure RT1 shown in Fig. 7 from the start step and moves to step SP1.

At step SP1, the CPU 2 determines whether the recording of a digital television program starts when watched.

When a negative result is obtained at this step SP1, this means that the digital television program is desired to be only watched and the user does not intend to record it. At this time, the CPU 2 waits for starting recording at step SP1.

When an affirmative result is obtained at step SP1, on the contrary, this means that since, for example, a customer comes or a telephone rings while the digital television program is watched, the digital television program is desired to be recorded. In this case, the CPU 2 moves to step SP2.

At step SP2, the CPU 2 starts to record the digital television program to be recorded, and thereby locally encrypts and records the recording transport stream TS3 corresponding to the television program in the hard disk and creates reproducible start point information by associating a time stamp first extracted from the PES header of he recording start part of the video TS packet data included in the recording transport stream TS3, with a reproducible start point, and then moves to step SP3.

At step SP3, the CPU 2 determines whether the digital television program is being recorded.

When an affirmative result is obtained at step SP3, this means that a copy protected program or a copy permitted program is being recorded for temporary storage as the digital television program to be recorded. At this time, the CPU 2 moves to step SP4.

At step SP4, the CPU 2 creates reproducible end point information by associating a time stamp (time stamp temporally following the time stamp associated with the reproducible start point) extracted from a PES header of the video TS packet data included in the recording transport stream TS3 corresponding to the copy protected program or the copy permitted program being recorded at this time, with the reproducible end point, and moves to step SP5.

When a negative result is obtained at step SP3, this means that both a copy protected program and a copy permitted program is not recorded now but, for example, a copy protected program recorded for temporary storage in the past should be prevented from having an overtime part. At this time, the CPU 2 moves to step SP5.

At step SP5, the CPU 2 compares a reproduction disabling detection time which is the temporary storage allowable time before the current time, with the change time of the history information to detect copyright protection information of the digital television program recorded at the reproduction disabling detection time, and moves to step SP6.

At step SP6, the CPU 2 determines whether the contents of the copyright protection information of the digital television program recorded at the reproduction disabling time indicates copy never.

When an affirmative result is obtained at step SP6, this means that the copy protected program was recorded for temporary storage as a digital television program at the reproduction disabling detection time and the copy protected program has an overtime part over the temporary storage allowable time after the temporary storage start time indicated by the time stamp associated with the reproducible start point. At this time, the CPU 2 moves to step SP7.

At step SP7, for the copy protected program recorded at the reproduction disabling detection time, the CPU 2 re-associates another time stamp temporally following the time stamp associated with the reproducible start point, with the reproducible start point and updates the contents of the reproducible start point information to disable the reproduction of the overtime part, and then moves to step SP8.

When a negative result is obtained at step SP6, this means that a copy permitted program was recorded at the reproduction disabling detection time as a digital television program or that the copy protected program is not recorded but a copy protected program is being recorded for temporary storage, the copy protected program being recorded may have an overtime part. At this time, the CPU 2 moves to step SP8.

At step SP8, the CPU 2 determines whether the reproduction of the copy protected program temporarily stored was disabled as the temporary storage allowable time passes.

When a negative result is obtained at step SP8, this means that at least a part of the copy protected program being recorded for temporary storage or stored in the past for temporary storage is stored within the temporary storage allowable time. That is, the reproduction of all the copy protected program temporarily stored has not been disabled because the temporary storage allowable time is not elapsed. At this time, the CPU 2 returns to step SP3.

When an affirmative result is obtained at step SP8, this means that, as a result of sequentially updating the reproducible start point information as the temporary storage allowable time passes for the copy protected program recorded for temporary storage, the same time stamp associated with the reproducible start point and the reproducible end point further matches the reproduction disabling detection time and the reproduction of the copy protected program has been disabled by deleting the reproducible start point information and the reproducible end point information. At this time, the CPU 2 returns back to step SP1.

As described above, while the recording/reproducing apparatus 1 starts, the CPU 2 repeats a process of step SP1 to step SP8 of the temporary storage management procedure RT1. Even if a copy protected program is temporarily stored when watched, the reproduction of an overtime part is disabled within the reproduction disabling time, thereby the entire copy protected program cannot be reproduced over the temporary storage allowable time.

In addition, the CPU 2 records the encrypted transport stream TS4 corresponding to a copy protected program temporarily stored, in the hard disk but stores the reproduction procedure information and the reproduction management information required for reproduction of the encrypted transport stream TS4 in the volatile memory 4.

Therefore, even if the recording/reproducing apparatus 1 is stopped before the reproduction of the entire copy protected program temporarily stored is disabled by updating the contents of the reproducible start point information, the CPU 2 automatically deletes the reproduction procedure information and the reproduction management information by stopping supply of power to the volatile memory 4.

Therefore, when the recording/reproducing apparatus 1 starts again, even if the encrypted transport stream TS4 corresponding to the copy protected program remains in the hard disk, the CPU 2 can disable its reproduction, so that the reproduction of the copy protected program can be disabled so that the program is not stored in a reproducible manner over the temporary storage allowable time.

Then, at the time of reproducing a copy protected program temporarily stored, the CPU 2 accesses the volatile memory 4 to read the latest reproduction management information corresponding to the copy protected program and also read reproduction procedure information based on the reproduction management information to be reproduced specified with the operating unit 9.

In this case, the CPU 2 controls the hard disk drive 5 via the memory 25 based on the stream file name and stream management information being stored in the reproduction procedure information and the reproducible start point information and reproducible end point information being stored in the stream reproduction management information.

Thereby, the CPU 2 reads only a data part within the reproducible range between the reproducible start point and the reproducible end point specified by the time stamps of the reproducible start point information and the reproducible end point information from the encrypted transport stream TS4 corresponding to the copy protected program to be reproduced from the hard disk, and sends the read data part to the descrambler 26 as the reproduction encrypted transport stream TS5.

In addition, the CPU 2 sends the encrypted scramble key data D2 being stored in the reproduction management information, to the descrambler 26.

Thereby, the descrambler 26 creates the original local scramble key data D20 by decoding the encrypted scramble key data D21 given from the CPU 2 with information unique to the recording/reproduction apparatus 1.

In addition, the descrambler 26 decodes the encrypted compressed and encoded video data and compressed and encoded audio data being stored in the reproduction encrypted transport stream TS5 given from the hard disk drive 5, with the local scramble key data D20, to create and send a reproduction transport stream TS6 to the demultiplexer 15.

At this time, the demultiplexer 15 separates the section TS packet data, and the video TS packet data and audio TS packet data of the copy protected program to be reproduced, from the reproduction transport stream TS6 given from the descrambler 26, under the control of the CPU 2 based on the program information being stored in the reproduction procedure information.

Then the demultiplexer 15 sends the video PES packet data D25 created based on the video TS packet data, the audio PES packet data D26 created based on the audio TS packet data, and the section data D18 created based on the section TS packet data, to the video decoder 16, the audio decoder 17, and the memory 18.

Further, the CPU 2 reads the section data D18 from the memory 18, and controls the video decoder 16 and the audio decoder 17 based on an order of decoding indicated by the additional information being stored in the section data D18.

Thereby, the video decoder 16 and the audio decoder 17 execute the same processes as the above-described case of watching a digital television program, so as to send the video signal S15 based on the video PES packet data D25 to the external video display unit 20 and also send the audio signal S16 based on the audio PES packet data D26 to the external audio output unit 21.

As described above, the CPU 2 can allow the user to watch a copy protected program temporarily stored, within a reproducible range allowed to be watched, according to a temporary storage allowable time, via the video display unit 20 and the audio output unit 21.

Further, at a time of reproducing a recorded copy permitted program, the CPU 2 reads the reproduction management information corresponding to the copy permitted program from the hard disk drive 5 via the memory 25 and also reads reproduction procedure information based on the reproduction management information, based on the copy permitted program to be reproduced specified with the operating unit 9 and a reproduction command.

Then the CPU 2 controls the hard disk drive 5 via the memory 25 based on the stream file name and stream management information being stored in the reproduction procedure information, and the reproducible start point information and reproducible end point information being stored in the stream reproduction management information, sends the encrypted scramble key data D21 being stored in the reproduction management information to the descrambler 26, and controls the demultiplexer 15 based on the program information being stored in the reproduction procedure information.

Thereby, the hard disk drive 5 reads a data part (that is, entire encrypted transport stream TS4) within a reproducible range between the reproducible start point and the reproducible end point specified by the time stamps of the reproducible start point information and the reproducible end point information for the encrypted transport stream TS4 corresponding to the copy permitted program to be reproduced, from the hard disk, and sends this to the descrambler 26.

In addition, the descrambler 26 creates the original local scramble key data D20 by decoding the encrypted scramble key data D21 given from the CPU 2 with information unique to the recording/reproducing apparatus 1, and creates the original recording transport stream TS3 by decoding the encrypted compressed and encoded video data and compressed and encoded audio data being stored in the encrypted transport stream TS4 given from the hard disk drive 5, with the local scramble key data D20, and sends them to the demultiplexer 15.

At this time, the demultiplexer 15 separates the section TS packet data, and the video TS packet data and audio TS packet data of the copy protected program to be reproduced, from the recording transport stream TS3 given from the descrambler 26, under the control of the CPU 2 according to the program information being stored in the reproduction procedure information.

Then the demultiplxer 15 sends the video PES packet data D16 created based on the video TS packet data, the audio PES packet data D17 created based on the audio TS packet data and the section data D18 created based on the section TS packet data, to the video decoder 16, the audio decoder 17 and the memory 18.

In addition, the CPU 2 reads the section data D18 from the memory 18 and controls the video decoder 16 and the audio decoder 17 based on an order of decoding indicated by the additional information being stored in the section data D18.

Thereby the video decoder 16 and the audio decoder 17 execute the same processes as the above-described case of watching a digital television program, thereby sending the video signal S11 based on the video PES packet data D16 to the external video display unit 20 and sending the audio signal S12 based on the audio PES packet data D17 to the external audio output unit 21.

As described above, the CPU 2 can allow the user to watch the recorded copy permitted program via the video display unit 20 and the audio output unit 21.

According to the above configuration, when recording of a copy protected program is instructed while the copy protected program is watched, the recording/reproducing apparatus 1 creates the recording transport stream TS3 corresponding to the copy protected program to be recorded based on the television signal S10 being received, and locally encrypts and records the created recording transport stream TS3 in the hard disk of the hard disk drive 5 for temporary storage (step SP1).

In addition, while extracting the time stamps from the GOP parts included in the recording transport stream TS3, the recording/reproducing apparatus 1 creates the reproducible start point information by associating the first time stamp with a reproducible start point, and changes the time stamp which is associated with a reproducible end point while associating a time stamp temporally following the first time stamp with the reproducible end point to update the contents of the reproducible end point information until the recording of the copy protected program is finished (step SP2 to step SP4).

Then the recording/reproducing apparatus 1 determines at prescribed periods whether the reproduction disabling detection time which is the temporary storage allowable time before the current time matches the temporary storage start time indicated by the time stamp associated with the reproducible start time. When they almost match, the apparatus 1 updates the contents of the reproducible start point information by re-associating a time stamp temporally following the time stamp associated with the reproducible start point with the reproducible start point (step SP5 to step SP7).

As a result, without using a special file system to sequentially delete overtime parts of the recording transport stream TS3 to be recorded as a file as in the case of a data deletion method exemplified by the operational guidelines for digital terrestrial television broadcasting, even if a copy protected program is temporarily stored, the recording/reproducing apparatus 1 can correctly remove an overtime part of the recording transport stream TS3 from the reproducible range from the reproducible start point to the reproducible end point so as to disable its reproduction.

In addition, as compared with the local scramble key deletion method exemplified by the operational guidelines for digital terrestrial television broadcasting, the recording/reproduction apparatus 1 can remove an overtime part of the recording transport stream TS3 corresponding to a copy protected program from a reproducible range to correctly disable its reproduction, without executing complicated processes including sequentially creating a local scramble key for each management time when the copy protected program is temporally stored and managing a large number of local scramble keys for the temporary storage allowable time.

In addition, along with updating the reproducible start point information of a recording transport stream TS3 corresponding to a copy protected program temporarily stored, the recording/reproducing apparatus 1 associates the same time stamp with a reproducible start point and a reproducible end point and then when the time stamp almost matches the reproduction disabling detection time, deletes the reproducible start point information and the reproducible end point information.

Therefore, the recording/reproducing apparatus 1 cannot detect the reproducible start point and the reproducible end point for the recording transport stream TS3 corresponding to the copy protected program even when trying to reproduce the copy protected program over the temporary storage allowable time, and thus cannot reproduce the recording transport stream TS3. Thus the apparatus 1 can entirely remove the recording transport stream TS3 of the copy protected program stored over the temporary storage allowable time at the time of reproduction, from the reproducible range to correctly disable its reproduction.

According to the above configuration, when the recording transport stream TS3 corresponding to a copy protected program which is allowed to be temporarily stored only from a temporary storage start time to a temporary storage end time is temporarily stored in the hard disk, the first time stamp is associated with a reproducible start point while time stamps of the GOP parts are extracted from the recording transport stream TS3, and then every time a period from the temporary storage allowable time indicated by the first time stamp to the current time reaches the temporary storage allowable time, another time stamp temporally following the time stamp is re-associated with the reproducible start point. Therefore, every time when an overtime part is created in the recording transport stream TS3 corresponding to the copy protected program temporarily stored, the overtime part is removed from the reproducible range between the reproducible start point and the reproducible end point to easily and correctly disable its reproduction, thus making it possible to realize a recording/reproducing apparatus capable of easily and correctly managing the temporary storage of copy protected programs according to guidelines.

In addition, along with updating reproducible start point information of the recording transport stream TS3 corresponding to a copy protected program temporarily stored, the same time stamp is associated with a reproducible start point and a reproducible end point and then when the time stamp almost matches the reproduction disabling detection time, the reproducible start point information and the reproducible end point information are deleted. Thereby, even the recording transport stream TS3 corresponding to the copy protected program is entirely stored over the temporary storage allowable time, the recording transport stream ST3 can be prevented from being reproduced erroneously, thus making it possible to realize a recording/reproducing apparatus capable of temporarily storing the copy protected program only within the temporary storage allowable time correctly.

Further, while the recording transport stream TS3 corresponding to the copy protected program is recorded in the hard disk for temporary storage, reproducible start point information and reproducible end point information required for reproduction of the recording transport stream TS3, and encrypted scramble key data D21 are stored in the volatile memory 4, and power supply to the volatile memory 4 is stopped when the recording/reproducing apparatus 1 is stopped. Therefore, even if the recording/reproducing apparatus 1 is stopped before the reproduction of the copy protected program is disabled due to a lapse of the temporary storage allowable time, the reproducible start point information, the reproducible end point information, and the encrypted scramble key data D21 in the volatile memory 4 are deleted according to the stop. Therefore, the recording transport stream TS3 stored over the temporary storage allowable time cannot be reproduced even when the recording/reproducing apparatus 1 starts again, resulting in being capable of safely and surely protecting the copyright of the copy protected program.

In addition, according to the above configuration, the reproducible start point information, the reproducible end point information and the encrypted scramble key data D21 are stored in the volatile memory 4, not in the hard disk used to record the recording transport stream TS3. Therefore, the frequency of access to the hard disk can be prevented from increasing due to updating the reproducible start point information and the reproducible end point information and recording and reproducing the encrypted scramble key data D21. In addition, in actual, the hard disk is accessed only when the recording transport stream TS3 is recorded and reproduced, resulting in decreasing the frequency of access to the hard disk. Thus even when a digital television program is recorded/reproduced in/from the hard disk at a relatively high transfer rate, processing loads in the hard disk drive 5 can be prevented from increasing.

Furthermore, when the recording transport stream TS3 corresponding to a copy protected program is temporarily recorded, a time stamp is associated with a reproducible start point while time stamps are extracted from the GOP parts accompanying with sequence headers of the recording transport stream TS3, the time stamp shorter than a management time for temporary storage. And then every time when a period from the temporary storage start time indicated by the time stamp to the current time reaches the temporary storage allowable time, a time stamp temporally following the time stamp associated with the reproducible start point is re-associated with the reproducible start point. Therefore, in addition to an effect in which the reproduction of the copy protected program can be easily and correctly disabled, the reproducible start point is always associated with the time stamp which is a randomly accessible point, thereby simplifying control the reproduction of the copy protected program.

Note that the above-described embodiment has described a case of sequentially extracting time stamps each indicating a temporary storage start time, from the GOP parts of the recording transport stream TS3 corresponding to a copy protected program when the copy protected program is temporarily stored. This invention, however, is not limited to this and a temporary storage start time can be sequentially associated with a prescribed part of the recording transport steam TS3 on the recording/reproducing apparatus 1 side.

Then, when a temporary storage start time is sequentially associated with a prescribed part of the recording transport stream TS3 on the recording/reproducing apparatus 1 side, a reproducible start point can be re-associated with a temporary storage start time which is a desirably selected prescribed time after the temporary storage start time, every time when a period from the temporary storage start time associated with the reproducible start point to the current time reaches the temporary storage allowable time, provided that the reproduction of an overtime part can be disabled according to the guidelines for temporary storage.

Further, the above embodiment has described a case of executing the temporary storage management procedure RT1 described with reference to Fig. 7 with the temporary storage management program being stored in the hard disk of the recording/reproducing apparatus 1. This invention, however, is not limited to this and the temporary storage management procedure RT1 can be executed by installing the temporary storage management program in the recording/reproducing apparatus 1 via wired- or wireless communication media such as a local area network, the Internet, and digital satellite broadcasting. Alternatively, the temporary storage management procedure RT1 can be executed by installing a program storage medium storing the temporary storage management program in the recording/reproducing apparatus 1.

In this connection, as a program storage medium for installing the temporary storage management program to execute the temporary storage management procedure RT1 in the recording/reproducing apparatus 1 to execute the program, not only package media such as CD-ROM (Compact Disk-Read Only Memory) and DVD (Digital Versatile Disc) but also semiconductor memories or magnetic disks for temporarily or permanently storing the temporary storage management program can be used. In addition, as a means for storing the temporary storage management program in a program storage medium, wired and wireless communication media such as local area network, the Internet, and digital satellite broadcasting can be used, and the program can be stored via various communication interfaces such as routers and modems.

Furthermore, the above embodiment has described a case of applying the temporary storage management apparatus according to this invention to the recording/reproducing apparatus 1 which records and reproduces a copy protected program of digital terrestrial television broadcasting described with reference to Fig. 1 to Fig. 7. This invention, however, is not limited to this and can be widely applied to temporary storage management apparatuses of other kinds such as personal computers, portable telephones, and audio devices which record/reproduce content data comprising video data and content data comprising audio data which are allowed to be temporarily stored for reproduction only within a temporary storage allowable time.

Furthermore, the above embodiment has described a case of applying the recording transport stream TS3 corresponding to a copy protected program of digital terrestrial television broadcasting described with reference to Fig. 1 to Fig. 7, as content data which is allowed to be temporarily stored in a recording medium for reproduction only within a prescribed temporary storage allowable time. This invention, however, is not limited to this and other kinds of content data can be widely applied, such as content data comprising video data and content data comprising audio data of a broadcasting program on for example, a network such as the Internet, cable television broadcasting, analog terrestrial television broadcasting, and satellite digital television broadcasting and radio broadcasting, content data comprising video and/or audio data to be broadcast without being compressed and encoded, and content data comprising video and/or audio data corresponding one or a plurality of prescribed parts excepting commercials in one program.

Furthermore, the above embodiment has described a case of applying the hard disk of the hard disk drive 5 described above with reference to Fig. 1 to Fig. 7, as a recording medium for temporarily storing content data which is allowed to be temporarily stored so as to be reproducible only within a prescribed temporary storage allowable time. This invention, however, is not limited to this and other recording media can be widely applied, such as semiconductor memories and magnetic optical discs.

Furthermore, the above embodiment has described a case of applying the CPU 2 described above with reference to Fig. 1 to Fig. 7 as an association means for associating the first temporary storage start time out of the temporary storage start times of prescribed parts of content data, with a reproducible start point indicating a start point from which the content data can be reproduced. This invention, however, is not limited to this and other association means can be widely applied, such as a microprocessor.

Furthermore, the above embodiment has described a case of applying the CPU 2 described above with reference to Fig. 1 to Fig. 7 as an association changing means for re-associating a temporary storage start time temporally following the temporary storage start time with the reproducible start point every time when a period from a temporary storage start time associated with the reproducible start point to the current time reaches the temporary storage allowable time. This invention, however, is not limited to this and other association changing means can be widely applied, such as a microprocessor.

Furthermore, the above embodiment has described a case of applying the volatile memory 4 described above with reference to Fig. 1 to Fig. 7, as an information recording means for recording history information of temporary storage of content data and recording of copy allowed content data in a recording medium when the copy allowed content data allowing copy without restriction or copy one generation is recorded together with content data which is allowed to be temporarily stored. This invention, however, is not limited to this and other information recording means can be widely applied, such as the hard disk of the recording/reproducing apparatus 1.

Furthermore, the above embodiment has described a case of applying the CPU 2 described above with reference to Fig. 1 to Fig. 7 as a determination means for determining based on history information whether content data was temporarily stored at the reproduction disabling detection time when the reproduction disabling detection time which is a temporary storage allowable time before the current time, almost matches the temporary storage start time associated with the reproducible start point. This invention, however, is not limited to this and other determination means can be widely applied, such as a microprocessor.

Furthermore, the above embodiment has described a case of applying the information extraction circuit 33 described above with reference to Fig. 1 to Fig. 7 as a start time extraction means for sequentially extracting temporary storage start times added to intra frame encoded images, from the content data comprising video data created by sequentially compressing and encoding prescribed parts each including a plurality of frame images in which the beginning is an inter frame encoded image. This invention, however, is not limited to this and other start time extraction means can be widely applied, such as a CPU which extracts a temporary storage start time of a prescribed part different from a GOP, from the content data.

As described above, according to this invention, when temporary storage of content data which is allowed to be temporarily stored in a recording medium so as to be reproducible only within a prescribed temporary storage allowable time, a reproducible start point indicating a start point from which the content data can be reproduced is associated with the first temporary storage start time out of the temporary storage start times of prescribed parts of the content data, and every time when a period from the temporary storage start time associated with the reproducible start point to the current time reaches the temporary storage allowable time, a temporary storage start time following the temporary storage start time is re-associated with the reproducible start point. Therefore, an overtime part of the temporarily stored content data is removed from a reproducible range which is a temporary storage range within the temporary storage allowable time by being sequentially located before the reproducible start point, so as to disable its reproduction easily and correctly, thus making it possible to realize a temporary storage management apparatus capable of easily and correctly managing the temporary storage of content data according to guidelines.

### Industrial Applicability

This invention can be used for temporary storage management apparatuses such as hard disk recorders, personal computers, and portable telephones.

## Claims

1. A temporary storage management apparatus for managing temporary storage of content data allowed to be temporarily stored in a recording medium so as to be reproducible only within a prescribed temporary storage allowable time, said temporary storage management apparatus comprising:
association means for associating a first temporary storage start time out of temporary storage start times of prescribed parts of the content data with a reproducible start point indicating a start point from which the content data can be reproduced; and
association changing means for re-associating another temporary storage start time following the temporary storage start time with the reproducible start point every time when a period from the temporary storage start time associated with the reproducible start point to a current time reaches the temporary storage allowable time.

2. The temporary storage management apparatus according to claim 1, further comprising
a volatile memory for storing information of the temporary storage start time associated with the reproducible start time.

3. The temporary storage management apparatus according to claim 2, wherein
said volatile memory stores encrypted key data used for encryption of the content data temporarily stored in said recording medium after being encrypted.

4. The temporary storage management apparatus according to claim 1, further comprising:
information recording means for, when copy allowed content data allowing copy without restrictions or copy one generation is recorded with the content data which is allowed to be temporarily stored, recording history information of temporary storage of the content data and recording of the copy allowed content data in said recording medium; and
determination means for, when a reproduction disabling detection time which is the temporary storage allowable time before the current time almost matches the temporary storage start time associated with the reproducible start point, determining based on the history information whether the content data was temporarily stored at the reproduction disabling detection time, wherein
said reproducible range updating means changes the temporary storage start time to be associated with the reproducible start point, depending on a determination result of the determination means, only when the content data was temporarily stored at the reproduction disabling detection time.

5. The temporary storage management apparatus according to claim 1, further comprising
start time extraction means for sequentially extracting the temporary storage start time added to an inter frame encoded image, from the content data comprising video data created by sequentially compressing and encoding the prescribed parts each having a plurality of frame images with a beginning as the inter frame encoded image.

6. A temporary storage management method for managing temporary storage of content data allowed to be temporarily stored in a recording medium so as to be reproducible only within a prescribed temporary storage allowable time, said temporary storage management method comprising:
an association step of associating a first temporary storage start time out of temporary storage start times of prescribed parts of the content data with a reproducible start point indicating a start point from which the content data can be reproduced; and
an association changing step of re-associating another temporary storage start time following the temporary storage start time with the reproducible start point every time when a period from the temporary storage start time associated with the reproducible start point to a current time reaches the temporary storage allowable time.

7. A temporary management program causing a computer to execute:
an association step of associating a first temporary storage start time out of temporary storage start times of prescribed parts of content data which is allowed to be temporarily stored in a recording medium so as to be reproducible only within a prescribed temporary storage allowable time, with a reproducible start point indicating a start point from which the content data can be reproduced; and
an association changing step of re-associating another temporary storage start time following the temporary storage start time with the reproducible start point every time when a period from the temporary storage start time associated with the reproducible start point to a current time reaches the temporary storage allowable time.
